(19) Europäisches Patentamt
European Patent Office
Office européen des brevets

(11) Veröffentlichungsnummer: **0 080 678**
**B1**

(12) # EUROPÄISCHE PATENTSCHRIFT

(45) Veröffentlichungstag der Patentschrift: **20.01.88**

(51) Int. Cl.$^4$: **C 08 B 11/00**

(21) Anmeldenummer: **82110764.6**

(22) Anmeldetag: **22.11.82**

(54) **Verfahren zur Herstellung von wasserlöslichen Celluloseethern mit Dimethoxyethan als Dispergierhilfsmittel.**

(30) Priorität: **30.11.81 DE 3147434**

(43) Veröffentlichungstag der Anmeldung:
**08.06.83 Patentblatt 83/23**

(45) Bekanntmachung des Hinweises auf die Patenterteilung:
**20.01.88 Patentblatt 88/03**

(84) Benannte Vertragsstaaten:
**AT BE CH DE FR GB IT LI NL SE**

(58) Entgegenhaltungen:
**US-A-1 980 988**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT**
**Postfach 80 03 20**
**D-6230 Frankfurt am Main 80 (DE)**

(72) Erfinder: **Felcht, Utz-Hellmuth, Dr.**
**Fasanenweg 16**
**D-6231 Schwalbach a. Ts (DE)**
Erfinder: **Perplies, Eberhard, Dr.**
**Rhoenstrasse 11**
**D-6229 Walluf (DE)**

**EP 0 080 678 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Verfahren zur Herstellung von Celluloseethern mit Dimethoxyethan als Dispergierhilfsmittel.

Die Erfindung betrifft ein Verfahren zur Herstellung von Celluloseethern, in dem ein inertes organisches Lösemittel als Dispergierhilfsmittel eingesetzt wird.

Die Herstellung von Celluloseethern mit einheitlichen oder unterschiedlichen Arten von Ethersubstituenten ist bekannt (siehe z.B. Ullmans Encyklopädie der technischen Chemie, Band 9, Stichwort "Celluloseäther", Verlag Chemie—Weinheim, 4. Auflage 1975, S. 192 ff.), wobei diese im allgemeinen entweder a) nach dem Prinzip der Ethersynthese nach Williamson durch Umsetzung von Cellulose mit Alkyl- oder Aralkylhalogeniden (unter Verbrauch einer Base) und/oder b), c) durch Umsetzung von Cellulose mit aktivierten Reaktionspartnern (in Anwesenheit katalytischer Mengen einer Base) hergestellt werden:

a) $Cell{-}\underline{\bar{O}}{-}H + Hal{-}R^1 + BOH \longrightarrow Cell{-}\underline{\bar{O}}{-}R^1 + H_2O + BHal$

b) 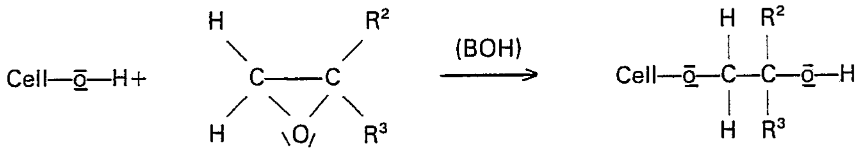


c) 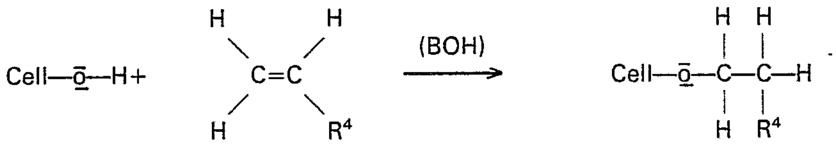


In diesen allgemeinen Gleichungen bedeuten:

- $Cell{-}\underline{\bar{O}}{-}H$ eine zu verethernde Hydroxylgruppe am Cellulosemolekül,
- Hal Chlor oder Brom,
- $R^1$ einen Alkylrest von $C_1$ bis $C_{15}$, einen Aralkylrest von $C_7$ bis $C_{15}$, einen Carboxyalkylrest von $C_1$ bis $C_3$, einen Sulfonoalkylrest von $C_1$ bis $C_3$, einen Phosphonoalkylrest von $C_1$ bis $C_3$, einen Hydroxyalkylrest von $C_1$ bis $C_6$, oder einen N,N-Dialkylaminoalkylrest von $C_1$ bis $C_3$ für die Alkylgruppen,
- $R^2$, $R^3$ Wasserstoff oder einen Alkylrest von $C_1$ bis $C_{13}$, wobei $R^2$ gleich $R^3$ oder davon verschieden ist,
- BOH Base wie NaOH oder eine quaternäre Ammoniumbase,
- $R^4$ einen gegebenenfalls N-substituierten Carbonsäureamid- oder Sulfonsäureamidrest oder einen Nitrilrest.

Durch gleichzeitiges oder stufenweises Einwirken von verschiedenen Veretherungsmitteln auf Cellulose werden auch Cellulosemischether hergestellt, wobei neben Reaktionen nach nur einer der angegebenen Varianten a bis c, insbesondere auch Reaktionen nach mindestens zwei der Varianten durchgeführt werden. Beispiele für Reaktionsprodukte, die nach der Variante a) hergestellt werden können, sind: Methylcellulose (MC), Benzylcellulose (BC), Carboxymethylcellulose (CMC), Sulfonoethylcellulose (SEC), Phosphonomethylcellulose (PMC) oder N,N-Diethylaminoethylcellulose (DEAEC). Beispiele für Reaktionsprodukte, die nach der Variante b) hergestellt werden können, sind: Hydroxyethylcellulose (HEC) oder Hydroxypropylcellulose (HPC). Beispiele für Reaktionsprodukte, die nach der Variante c) hergestellt werden können, sind: Sulfonamidoethylcellulose oder Cyanethylcellulose. Zu den Mischethern der Cellulose, die nach der gleichen oder nach verschiedenen der angegebenen Varianten hergestellt werden können, zählen beispielsweise Methyl-hydroxyethylcellulose (MHEC), Ethyl-hydroxyethylcellulose (EHEC), Hydroxyethyl-hydroxypropylcellulose (HEHPC), Methyl-carboxymethylcellulose (MCMC), Hydroxyethyl-phosphonomethylcellulose (HEPMC) oder Methyl-hydroxyethylhydroxypropylcellulose (MHEHPC). Unter dem Begriff "Celluloseether" sind im Rahmen der folgenden Ausführungen sowohl Produkte mit einem einheitlichen Substituenten wie Hydroxyethylcellulose als auch Produkte mit mindestens zwei verschiedenen Substituenten wie Methyl-carboxymethylcellulose zu verstehen.

Die meisten der bekannten Verfahren zur Herstellung von Celluloseethern werden in zwei Kernstufen durchgeführt:

1. Die Herstellung der "Alkalicellulose".
2. Die Veretherung des Cellulosemoleküls.

Zur Herstellung der "Alkalicellulose" wird Cellulose in kleinteiliger (z.B. gemahlener) Form in geeigneten technischen Aggregaten mit Wasser und Alkalihydroxiden (im allgemeinen NaOH, es sind aber auch andere Basen wie quaternäre Ammoniumbasen möglich) möglichst gleichmäßig vermischt. Die

Alkalihydroxide können dabei in fester Form oder in Form einer wäßrigen Lösung zum Einsatz kommen. Für die Veretherungsreaktion selbst und damit für die Qualität des Reaktionsendprodukts ist die Gleichmäßigkeit und Intensität des Vermischens von entscheidender Bedeutung (siehe dazu beispielsweise DE—OS 29 29 002). Die Alkalisierung erfolgt im allgemeinen bei möglichst niedriger Temperatur, z.B. Raumtemperatur und weniger, um einen Abbau des Polymeren (das sogenannte "Reifen") zu unterdrücken; unter bestimmten Umständen, beispielsweise der späteren Herstellung niedrigviskoser Celluloseether, kann dieser Abbau jedoch auch erwünscht sein. In der Alkalisierungsstufe kann auch bereits das Veretherungsmittel zugegeben werden, wobei jedoch im allgemeinen zur Durchführung der eigentlichen Veretherungsreaktion die Temperatur noch erhöht werden muß [siehe dazu beispielsweise DE—AS 15 43 009 (=US—PS 3 351 583)].

Die eigentliche Veretherungsstufe wird im allgemeinen so durchgeführt, daß die in der ersten Stufe erzeugte Alkalicellulose zusammen mit dem inzwischen zugegebenen Veretherungsmittel auf Temperaturen zwischen 30° und 120°C erhitzt wird. Dabei kann auch vorher ein Teil des in der ersten Stufe vorhandenen Wassers entfernt werden (siehe dazu beispielsweise DE—OS 30 10 464). Auch in der zweiten Stufe ist eine intensive Durchmischung für die Qualität des Reaktionsprodukts und für die Wirtschaftlichkeit des Verfahrens sehr wichtig, da beispielsweise eine gute Substitutionsausbeute bei möglichst geringem Mengeneinsatz an Veretherungsmittel(n) angestrebt wird.

Für beide Reaktionsstufen sind sowohl kontinuierliche als auch diskontinuierliche Verfahrensweisen bekannt. Es können bei bestimmten Reaktionskomponenten auch beide Stufen so zusammengefaßt werden, daß keine Voralkalisierung der Cellulose stattfindet. Zur besseren Durchmischung des heterogenen Reaktionsgemenges können in beiden Stufen, oder zumindest in einer der beiden Stufen, Dispergierhilfsmittel (Suspensionsmittel) eingesetzt werden, wobei aus dem Stand der Technik sowohl wasserlösliche als auch in Wasser mehr oder weniger unlösliche organische Lösemittel bekannt sind:

TABELLE

| Art des organischen Lösemittels | Typ des Celluloseethers | veröffentlicht in |
|---|---|---|
| Ethylenglykolmonoalkylether | MC, EC, CMC | US—PS 2 553 695 |
| Ethylenglykoldiethylether, Dioxan, Tetrahydrofuran oder Alkanole ($C_3$ oder $C_4$) | CMHEC | US—PS 2 618 632 |
| Mischungen aus Alkanolen ($C_3$ bis $C_{10}$) und Alkoxyalkanolen | HEC, HPC | US—PS 2 682 535 |
| Isopropanol | CMC | US—PS 2 749 336 oder US—PS 2 767 170 |
| Mischungen aus Toluol, Heptan, aliphatischen Monoethern oder aliphatischen Ketonen und Alkoxyalkanolen | HEC | US—PS 2 744 894 |
| Mischung aus Tetrachlorkohlenstoff und Ethanol | CMC | US—PS 3 085 087 |

TABELLE (Fortsetzung)

| Art des organischen Lösemittels | Typ des Celluloseethers | veröffentlicht in |
|---|---|---|
| Aceton oder Methylethylketon | HEC | US—PS 3 131 177 |
| Mischung aus Dimethylsulfoxid und Formaldehyd | HEC, HPC, HBC | US—PS 4 024 335 |
| Mischungen aus Benzol, Toluol oder Xylol und Ethanol | CMC | DE—AS 10 09 173 |
| Alkanole ab $C_3$, Glykole, Glykolether, aliphatische Ketone, Tetrahydrofuran oder Dioxan | CNEC | DE—AS 11 96 628 |
| Mischungen aus Alkanen (ab $C_6$), Aromaten, aliphatischen Ketonen, aliphatischen Ethern oder halogenierten Alkanen *und* Alkanolen ($C_2$ bis $C_4$), Dimethylsulfoxid, Dioxan oder Tetrahydrofuran | HPC | DE—AS 15 43 009 (=US—PS 3 351 583) |
| Alkanole ($C_1$ bis $C_5$), Toluol oder Xylol | MHEC, CMC | DE—OS 29 29 002 |
| Isopropanol oder Gemisch aus t-Butanol oder Aceton | MAlkC, HEAlkC, HPAlkC (Alk von $C_{10}$ bis $C_{24}$) | DE—OS 30 04 161 |
| Mischungen aus Alkanen oder Aromaten von $C_6$ bis $C_{12}$ und Alkanolen ($C_1$ bis $C_4$) | MHPC, MHEC, CMC | DE—OS 30 10 464 |

Diese aus dem Stand der Technik bekannten organischen Lösemittel zeigen jedoch bei ihrem Einsatz während der Herstellung von Alkalicellulose und/oder während der Veretherung von Cellulose mindestens einen der nachfolgend aufgeführten Nachteile:

— Sie können Nebenreaktionen mit starken Basen eingehen, beispielsweise entsteht so aus Aceton Diacetonalkohol.
— Sie können mindestens teilweise mit Wasser nicht mischbar sein, so daß dann Phasentrennungen eintreten (z.B. bei Alkanen, Aromaten oder aliphatischen Ethern).
— Hydroxylgruppen enthaltende organische Lösemittel können mit den Veretherungsmitteln konkurrierend zur Polyhydroxyverbindung Cellulose reagieren, so daß die Substitutionsausbeute—bezogen auf die Cellulose—gesenkt wird (z.B. bei Alkanolen oder Alkoxyalkanolen).
— Sie können toxisch sein, so daß sie in zeitgemäßen Verfahren möglichst nicht mehr eingesetzt werden (z.B. bei Dimethylsulfoxid oder Dioxan).
— Der Siedepunkt des organischen Lösemittels ist höher als der des Wassers, so daß eine—in einem zeitgemäßen Verfahren erforderliche—destillative Rückgewinnung unwirtschaftlich ist, und außerdem die bei der Veretherung als Nebenprodukte anfallenden Salze dann im organischen Lösemittel zurückbleiben [z.B. bei Ethylenglykoldiethylether mit einem Siedepunkt ($Kp_{760}$) von 123,5°C].
— Sie können dazu neigen, gefährliche Nebenprodukte zu bilden (z.B. bei Tetrahydrofuran die Bildung von Peroxiden).

Aus der US—PS 1 980 988 ist weiterhin ein einstufiges Verfahren zur Herstellung von organo-löslichen Celluloseethern bekannt, bei dem neben vielen bekannten organischen Lösemitteln wie Chlorbenzol, Nitrobenzol, Pyridin, p-Dioxan auch Dimethoxyethan in der einstufigen Reaktion eingesetzt wird, um die gebildeten Ether nach der Reaktion in gelöster Form zu erhalten, so daß das Nebenprodukt Natriumchlorid in fester Form abfiltriert werden kann. Diese organo-löslichen Ether werden beispielsweise bei der Herstellung von Lacken eingesetzt.

Aufgabe der vorliegenden Erfindung ist es deshalb, ein Verfahren zur Herstellung wasserlösliche Celluloseether oder Mischether zu schaffen, bei dem ein geeignetes organisches Lösemittel eingesetzt werden kann, das es ermöglicht, unter den üblichen Verfahrensbedingungen möglichst hohe

Substitutionsausbeuten ohne für das Lösemittel spezifische Nebenreaktionen bei gleichzeitig problemloser Handhabung und Aufarbeitung zu erzielen.

Die Lösung der Aufgabe geht aus von einem Verfahren zur Herstellung von Celluloseethern aus Cellulose und Alkylierungsmitteln in Gegenwart von Wasser, Basen und mindestens einem inerten organischen Lösemittel. Erfindungsgemäß ist es dadurch gekennzeichnet, daß es zweistufig a) in einer Alkalisierungsstufe und b) in einer nachfolgenden Veretherungsstufe durchgeführt und Dimethoxyethan als inertes Lösemittel in der Stufe a) eingesetzt wird. Alternativ kann das Verfahren auch so durchgeführt werden, daß das Dimethoxyethan als inertes Lösemittel nach Beendigung der Stufe a) oder während der Durchführung der Stufe b) eingesetzt wird.

Dimethoxyethan (auch Ethylenglykoldimethylether oder Dimethylglykol) ist literaturbekannt; es ist eine farblose, mit Wasser in jedem Verhältnis mischbare, nichttoxische Flüssigkeit eines Siedepunkts ($Kp_{760}$) von 86°C dessen Azeotrop mit Wasser (9:1) bei etwa 80°C siedet.

Das erfindungsgemäße Verfahren kann diskontinuierlich oder auch kontinuierlich in einem der von der Celluloseetherchemie her bekannten Aggregate (z.B. Kneter, Rührkessel oder Wurfmischer) durchgeführt werden. Wenn die Temperatur des Reaktionsgemisches so hoch gewählt wird, daß sie über der Siedetemperatur des organisches Lösemittel/$H_2O$-Gemisches liegt, empfiehlt sich die Durchführung des erfindungsgemäßen Verfahrens in einer Druckapparatur; auch bei Einsatz von unter Normalbedingungen (Normaldruck, Raumtemperatur) bereits gasförmigen Reaktionskomponenten wird üblicherweise in einer Druckapparatur gearbeitet (z.B. bei Einsatz von Ethylenoxid als Veretherungsmittel). Die in den folgenden Ausführungen angegebenen Mengenanteile für die Komponenten geben lediglich die Summe der Anteile der zur Reaktion erforderlichen Komponenten zu Beginn der Veretherungsstufe an, dann liegt z.B. bei separater Alkalisierungsstufe bereits ein Teil der Cellulose und des Alkalimetallhydroxids als Alkalicellulose vor; oder wenn das Veretherungsmittel beispielsweise in der Säureform (z.B. Monochloressigsäure zur Herstellung vom CMC) in das Reaktionsgemisch eingegeben wird, so müssen zur Neutralisation zusätzliche Basenanteile eingesetzt werden.

Die eingesetzte Cellulose ist entweder natürlicher Herkunft, beispielsweise Baumwoll-Linters oder Holz-Zellstoff, oder liegt in regenerierter Form wie als Cellulosehydrat vor; die Teilchengröße der Cellulose sollte vor Beginn der Reaktion möglichst kleiner als etwa 2,5 mm, insbesondere kleiner als etwa 1 mm sein, wobei diese Teilchengröße beispielsweise durch Mahlung der längerfaserig angelieferten Cellulose zu "Pulvern" erreicht werden kann.

Die Basen werden bevorzugt als Alkalimetallhydroxid—üblicherweise NaOH, aber auch KOH oder LiOH—in fester Form oder in gelöster Form als wäßrige Alkalimetallhydroxid-Lösung (beispielsweise in 20 bis 50 Gew.-%iger Form) eingesetzt, aber auch Ammoniumbasen können verwendet werden. Bevorzugt werden im erfindungsgemäßen Verfahren etwa 3 bis 30 Gew.-Teile Dimethoxyethan pro Gew.-Teil Cellulose eingesetzt, besonders bevorzugt 6 bis 18 Gew.-Teile. Sofern Alkalimetallhydroxide als Basen eingesetzt werden, beträgt ihr Anteil im allgemeinen 0,8 bis 12,0 Mol, insbesondere 1,0 bis 6,0 Mol, pro Mol Cellulose (als Anhydro - D - glukose - Einheit gerechnet). Der Wasseranteil im Reaktionsgemisch wird zweckmäßig so gewählt, daß er im Bereich von 5 bis 25 Mol pro Mol Cellulose liegt; oder wenn als Bezugsgröße das Flüssigkeitsgemisch Dimethoxyethan/Wasser dienen soll, so liegt der Anteil des Wassers im Gemisch bei 3 bis 40 Gew.-%. Als Veretherungsmittel werden bevorzugt Alkylchloride von $C_1$ bis $C_3$, Alkylenoxide von $C_2$ bis $C_4$ und/oder Chloralkansäuren von $C_2$ bis $C_4$ bzw. deren Salze eingesetzt, insbesondere Methylchlorid, Ethylchlorid, Ethylenoxid, Propylenoxid und/oder Monochloressigsäure oder ein entsprechendes Salz. Es können aber auch Butylenoxid-1,2, Monochlorpropionsäure, Chlorethansulfonsäure, Vinylsulfonsäure, Acrylnitril, Chlormethanphosphonsäure, 1 - N,N - Diethylamino - 2 - chlorethan oder 2,3 - Epoxypropyl - trimethylammoniumchlorid zur Reaktion gebracht werden. Der Anteil des Veretherungsmittels beträgt üblicherweise 0,05 bis 25 Mol, insbesondere 0,1 bis 10 Mol, pro Mol Cellulose.

Bei der praktischen Durchführung des erfindungsgemäßen Verfahrens wird zuerst die Cellulose im Gemisch aus Dimethoxyethan, Wasser und Alkalimetallhydroxid (oder quaternärer Ammoniumbase) alkalisiert, wonach die Zugabe des Veretherungsmittels in einer oder mehreren Stufe(n) [abhängig von der Art des oder der Veretherungsmittel(s)] erfolgt. Es ist aber auch eine Alkalisierung ohne Anwesenheit des Dimethoxyethans möglich, wobei dessen Zugabe dann erst vor oder bei der oder den Veretherungsstufe(n) erfolgt.

Die jeweiligen Reaktionsgemische und Reaktionsgefäße können bekanntermaßen auch mit Inertgasen wie Stickstoff gespült werden, um Sauerstoff zu entfernen und so hohe Viskositäten der Reaktionsprodukte zu erreichen; auch sogenannte Antioxidantien (siehe beispielsweise DE—OS 20 00 082) wie Pyrogallol oder Gallussäure können zur Verhinderung des Viskositätsabbaus (Depolymerisation) zugesetzt werden.

Alle Stufen werden in der Regel unter guter Durchmischung gefahren. In der separaten Alkalisierungsstufe wird üblicherweise bei Raumtemperatur (von 0°, insbesondere von 15° bis 30°C) gearbeitet, die Veretherung verläuft besonders erfolgreich bei einer Temperatur zwischen 30°C und 120°C, insbesondere bis zu 90°C. Bei Durchführung der Alkalisierung und Veretherung in einer Stufe kann diese zunächst einige Zeit bei Raumtemperatur gefahren werden, bevor auf die endgültige, zur Veretherung erforderliche Temperatur erhöht wird. Wenn das Verfahren ohne Einsatz von Druckaggregaten ablaufen soll, empfiehlt sich ein Arbeiten unterhalb der Siedetemperatur des 90%igen azeotropen Gemisches aus Dimethoxyethan/Wasser von etwa 80°C. Bei Einsatz von gasförmigem Veretherungsmittel (wie Ethylenoxid

oder Methylchlorid) ist allerdings ein druckloses Arbeiten nicht zweckmäßig. Der sich maximal im Reaktionsgefäß einstellende Druck entspricht der Summe der Partialdrucke der Komponenten im Reaktionsgemisch.

Die erforderlichen Zeiten in der Veretherungsstufe liegen—je nach Reaktionstemperatur—im allgemeinen zwischen 30 min und 8 h. In einer Trennvorrichtung (z.B. einer Zentrifuge) wird das Rohprodukt, bevorzugt nach Zugabe von Säure bis zur Neutralisation der noch unverbrauchten Basen, zunächst vom Hauptteil der flüssigen Komponenten befreit und kann gegebenenfalls danach einer Extraktion zur Entfernung anhaftender Salze unterzogen werden; abschließend wird es getrocknet und kann gegebenenfalls gemahlen, mit weiteren Komponenten vermischt oder auch granuliert werden; diese Aufarbeitungs-, Reinigungs- und Nachbehandlungsmethoden sind die in der Celluloseetherchemie üblichen und benötigen deshalb keine ausführliche Beschreibung.

Die nach dem erfindungsgemäßen Verfahren herstellbaren Celluloseether können auf den bekannten Gebieten der Technik eingesetzt werden, also beispielsweise als Verdickungsmittel, Klebstoff, Zusatzmittel auf dem Baustoffgebiet, Zusatzmittel auf dem Lebensmittelgebiet o.ä..

Der Einsatz von Dimethoxyethan als Dispergierhilfsmittel in den üblichen Verfahren zur Herstellung von Celluloseethern führt insbesondere zu folgenden Vorteilen:

— Dimethoxyethan ist beständig gegenüber starken Basen wie wäßrigen Alkalimetallhydroxid-Lösungen.
— Es reagiert nicht mit den bekannten Veretherungsmitteln.
— Seine Verwendung führt zu überraschend hohen Substitutionsausbeuten.
— Der Siedepunkt seines Azeotrops mit Wasser bei etwa 80°C erlaubt eine leichte Reinigung der flüssigen Reaktionskomponenten nach Durchführung der Reaktion und damit eine kostengünstige Rückgewinnungs- und Rückführungsmöglichkeit (Recycling).

In den folgenden Beispielen verhalten sich Gew.-Teile zu Vol.-Teilen wie kg zu $dm^3$, die Prozentangaben sind auf das Gewicht bezogen. Die angegebenen Viskositätswerte wurden—wenn nichts anderes angegeben ist—im Höppler-Kugelfallviskosimeter in 2%iger wäßriger Lösung bei 20°C bestimmt. Der "DS" ist der Substitutionsgrad, d.h. die mittlere Anzahl von substituierten OH-Gruppen pro Anhydro - D - glucose - Einheit; er liegt bei Cellulose im Bereich von 0,0 bis 3,0. Der "MS" ist der molare Substitutionsgrad, d.h. die mittlere Anzahl von Molen des substituierenden Reagens, die pro Mol Anhydro - D - glucose - Einheit etherartig gebunden wurden; er kann bei Cellulose auch größer als 3,0 sein; er wird normalerweise anstelle des DS zur Charakterisierung solcher Substituenten am Celluloseether verwendet, die durch Mehrfachsubstitution an einer OH-Gruppe entstehen können, d.h. beispielsweise beim Hydroxyalkylsubstituenten, weil die entstehenden OH-Gruppen der Hydroxyalkylgruppen ebenfallswie die OH-Gruppen der Cellulose selbst—substituierbar sind.

Beispiel 1

Es wurden 50 Gew.-Teile eines Chemiezellstoffs (0,5 mm Mahlung) in 425 Gew.-Teilen Dimethoxyethan (DME, 8,5 Gew.-Teile pro Gew.-Teil Cellulose) suspendiert und in einem Knetaggregat mit einer Lösung aus 15,1 Gew.-Teilen NaOH (1,30 Mol pro Mol Cellulose) in 83,4 Vol.-Teilen $H_2O$ (16 Mol pro Mol Cellulose) versetzt. Das Gemisch wurde während 40 min bei Raumtemperatur geknetet, es wurden dann 58 Gew.-Teile Ethylenoxid (4,54 Mol pro Mol Cellulose) hinzugegeben und das Veretherungsgemisch während 60 min bei 30°C und während weiterer 60 min bei 70°C zur Reaktion gebracht. Nach der üblichen Aufarbeitung wurde eine in Wasser klarlösliche HEC eines MS von 2,52 bei einer Substitutionsausbeute von 57% erhalten.

Vergleichsbeispiel V1

Es wurde nach den Angaben des Beispiels 1 verfahren, aber mit Isopropanol anstelle des DME. Es wurde eine in Wasser klarlösliche HEC eines MS von 2,26 bei einer Substitutionsausbeute von 50% erhalten, d.h. durch erfindungsgemäßen Austausch des organischen Lösemittels gelang eine Verbesserung in der Substitutionsausbeute gegenüber dem in der Celluloseetherherstellung sehr häufig gebrauchten Isopropanol.

Beispiel 2

Es wurden in einem Knetaggregat 100 Gew.-Teile eines Chemiezellstoffs (0,5 mm Mahlung) in 740 Gew.-Teilen DME (7,4 Gew.-Teile pro Gew.-Teil Cellulose) mit einer Lösung aus 30 Gew.-Teilen NaOH (1,29 Mol pro Mol Cellulose) in 188 Vol.-Teilen $H_2O$ (17,9 Mol pro Mol Cellulose) versetzt. Das Gemisch wurde während 30 min bei Raumtemperatur geknetet, es wurden dann 115 Gew.-Teile Ethylenoxid (4,5 Mol pro Mol Cellulose) zugegeben und das Veretherungsgemisch während 60 min bei 30°C und während weiterer 60 min bei 70°C zur Reaktion gebracht. Nach der üblichen Aufarbeitung wurde eine in Wasser klarlösliche HEC eines MS von 2,87 bei einer Substitutionsausbeute von 64% und mit einer Viskosität von 620 mPas (1,9%ige Lösung) erhalten.

Beispiel 3

Es wurde nach den Angaben des Beispiels 2 verfahren, aber mit 24 Gew.-Teilen NaOH (1,03 Mol pro

Mol Cellulose) in 105 Vol.-Teilen $H_2O$ (10,0 Mol pro Mol Cellulose) und 82 Gew.-Teilen Ethylenoxid (3,2 Mol pro Mol Cellulose). Es wurde eine in Wasser klarlösliche HEC eines MS von 2,23 bei einer Substitutionsausbeute von 70% und mit einer Viskosität von 17 000 mPas (1,9%ige Lösung) erhalten.

Beispiel 4

Es wurden in einen druckfesten Umpumprührkessel 148,5 Gew.-Teile DME (7,43 Gew.-Teile pro Gew.-Teil Cellulose) und 16,5 Vol.-Teile $H_2O$ gefüllt, danach wurden 4,8 Gew.-Teile NaOH (1,03 Mol pro Mol Cellulose), 16 Vol.-Teile $H_2O$ (insgesamt 18,1 Mol pro Mol Cellulose) und 1,4 Gew.-Teile Namonochloracetat (0,10 Mol pro Mol Cellulose) zudosiert und das Gemisch während 15 min unter externer Kühlung bei 20°C homogenisiert. Nach Zugabe von 20 Gew.-Teilen Zellstoffpulver (0,25 mm Mahlung) wurde der Kessel verschlossen und Vakuum angelegt bis ein Druck von 0,1 bar (absolut) erreicht war, wonach 20 Gew.-Teile Ethylenoxid (3,9 Mol pro Mol Cellulose) zudosiert wurden und mit Stickstoff ein Überdruck von 0,2 bar eingestellt wurde. Das Gemisch wurde während 30 min bei 30°C und während 60 min bei 70°C zur Reaktion gebracht. Nach der üblichen Aufarbeitung wurde eine HECMC mit einem $DS_{CM}$ von 0,08, einem $MS_{HE}$ von 2,77 (=71% Substitutionsausbeute) und mit einer Viskosität von 13 000 mPas (1,9%ige Lösung) erhalten.

Beispiel 5

In einem Knetaggregat wurden 172 Gew.-Teile eines Fichten-Zellstoffs (0,5 mm Mahlung) mit 140 Gew.-Teilen NaOH (3,5 Mol pro Mol Cellulose), 172 Vol.-Teilen $H_2O$ (9,5 Mol pro Mol Cellulose) und 1548 Gew.-Teilen DME (9,0 Gew.-Teile pro Gew.-Teil Cellulose) während 45 min bei 20 bis 25°C vermischt. Das Gemisch wurde in einen Autoklaven überführt, und nach dessen Verschließen wurden 44 Gew.-Teile Ethylenoxid (1,0 Mol pro Mol Cellulose) und 1 000 Gew.-Teile Methylchlorid (19,8 Mol pro Mol Cellulose) zudosiert. Man heizte innerhalb von 60 min bis auf eine Temperatur von 80°C auf, hielt diese Temperatur während 60 min und arbeitete das Reaktionsgemisch nach Ablassen des überschüssigen Methylchlorids wie üblich auf. Es wurde eine in Wasser klarlösliche MHEC mit einem $MS_{HE}$ von 0,3, einem $DS_M$ von 1,78 (=51% Substitutionsausbeute) und mit einer Viskosität von 22 000 mPas erhalten.

Beispiel 6

In einem Rührautoklaven wurden 172 Gew.-Teile eines Fichten-Zellstoffs (0,5 mm Mahlung) mit 105 Gew.-Teilen einer 50%igen wäßrigen NaOH-Lösung und 1720 Gew.-Teilen eines Gemisches aus 9 Teilen DME/1 Teil $H_2O$ (9,0 Gew.-Teile DME pro Gew.-Teil Cellulose) während 45 min bei 20 bis 25°C vermischt. Nach Zugabe von 66 Gew.-Teilen Ethylenoxid (1,5 Mol pro Mol Cellulose) wurde auf 35°C erwärmt, während 30 min bei dieser Temperatur belassen und danach während 60 min auf 70°C geheizt. Das Reaktionsgemisch wurde auf 20°C abgekühlt, es wurden 153,5 Gew.-Teile einer 50%igen wäßrigen NaOH-Lösung (insgesamt 3,24 Mol NaOH und 16,7 Mol $H_2O$ pro Mol Cellulose) zugesetzt und das Gemisch wurde während 30 min unter Luftausschluß bei 20°C gerührt. Die Zweitveretherung wurde mit 1250 Gew.-Teilen Methylchlorid (24,8 Mol pro Mol Cellulose) durchgeführt, es wurde während 60 min auf 80°C aufgeheizt und das Gemisch während weiterer 60 min auf dieser Temperatur gehalten. Nach der üblichen Aufarbeitung wurde eine in Wasser klarlösliche MHEC mit einem $MS_{HE}$ von 0,87 (=58% Substitutionsausbeute), einem $DS_M$ von 1,60 (=50% Substitutionsausbeute) und mit einer Viskosität von 25 800 mPas erhalten.

Beispiel 7

In einem Rührautoklaven wurde zu einer Suspension von 172 Gew.-Teilen eines Fichten-Zellstoffs (0,5 mm Mahlung) in 1800 Gew.-Teilen DME (10,5 Gew.-Teile pro Gew.-Teil Cellulose) innerhalb von 5 min eine Lösung von 80 Gew.-Teilen NaOH (2,0 Mol pro Mol Cellulose) in 132 Vol.-Teilen $H_2O$ (7,3 Mol pro Mol Cellulose) bei 20°C zugetropft und das Gemisch während 30 min bei dieser Temperatur gerührt. Nach Evakuieren des Autoklaven wurden 36 Gew.-Teile Ethylenoxid (0,82 Mol pro Mol Cellulose) und 636 Gew.-Teile Methylchlorid (12,6 Mol pro Mol Cellulose) zugesetzt und das Gemisch während 45 min auf 50°C und anschließend während 70 min auf 90°C erhitzt. Nach Ablassen des überschüssigen Methylchlorids wurde wie üblich aufgearbeitet und eine MHEC mit einem $MS_{HE}$ von 0,3 (=38% Substitutionsausbeute), einem $DS_M$ von 1,4 (=70% Substitutionsausbeute) und einer Viskosität von 53 000 erhalten.

Beispiel 8

In einem Rührautoklaven wurde zu einer Suspension von 172 Gew.-Teilen eines Fichten-Zellstoffs (0,5 mm Mahlung) in 1530 Gew.-Teilen DME (8,9 Gew.-Teile pro Gew.-Teil Cellulose) innerhalb von 5 min eine Lösung von 112 Gew.-Teilen NaOH (2,8 Mol pro Mol Cellulose) in 170 Vol.-Teilen $H_2O$ (9,5 Mol pro Mol Cellulose) bei 20°C zugetropft und das Gemisch während 45 min bei dieser Temperatur gerührt. Danach wurden 35 Gew.-Teile Propylenoxid (0,6 Mol pro Mol Cellulose) zugegeben, während 45 min wurde das Gemisch auf 95°C geheizt und während 60 min bei dieser Temperatur belassen. Nach Abkühlung des Reaktionsgemischs auf 30°C wurden 306 Gew.-Teile Methylchlorid (6,1 Mol pro Mol Cellulose) zugegeben, das Reaktionsgemisch wurde erneut auf 95°C aufgeheizt und während 70 min bei dieser Temperatur belassen. Es wurde wie üblich aufgearbeitet und eine in Wasser klarlösliche MHPC mit einem $MS_{HP}$ von 0,2 (=33% Substitutionsausbeute), einem $DS_M$ von 1,6 (=57% Substitutionsausbeute) und mit einer Viskosität von 5 000 mPas erhalten.

Beispiel 9

In einem Rührkessel wurden zu einer Suspension von 53 Gew.-Teilen Holz-Zellstoff (0,5 mm Mahlung) in 690 Gew.-Teilen eines Gemisches aus 9 Teilen DME/1 Teil $H_2O$ 49 Gew.-Teile einer 50%igen wäßrigen NaOH-Lösung (insgesamt 16,9 Mol $H_2O$ und 1,99 Mol NaOH pro Mol Cellulose) zudosiert und das Gemisch während 30 min bei 20°C gerührt. Die Veretherung wurde mit einer Lösung von 17,5 Gew.-Teilen Monochloressigsäure (0,6 Mol pro Mol Cellulose) in 17,5 Gew.-Teilen DME (insgesamt 12,0 Gew.-Teile pro Gew.-Teil Cellulose) durchgeführt, wobei während 40 min auf 66°C aufgeheizt wurde und das Gemisch während 60 min bei dieser Temperature belassen wurde. Nach Abkühlung und Zusatz von 4 Gew.-Teilen einer 30%igen wäßrigen $H_2O_2$-Lösung wurde in üblicher Weise aufgearbeitet und eine in Wasser klarlösliche NaCMC eines DS von 0,39 (=65% Substitutionsausbeute) und einer Viskosität von 42 mPas erhalten.

Beispiel 10

Es wurde nach den Angaben des Beispiels 9 verfahren, aber mit 54,2 Gew.-Teilen einer 50%igen wäßrigen NaOH-Lösung (insgesamt 17,2 Mol $H_2O$ und 2,19 Mol NaOH pro Mol Cellulose) und 29,1 Gew.-Teilen Monochloressigsäure (1,0 Mol pro Mol Cellulose) in 29 Gew.-Teilen DME (insgesamt 12,2 Gew.-Teile pro Gew.-Teil Cellulose) und ohne Zusatz von $H_2O_2$. Die in Wasser klarlösliche NaCMC hatte einen DS von 0,62 (=62% Substitutionsausbeute) und eine Viskosität von 500 mPas.

Beispiel 11

Es wurde nach den Angaben des Beispiels 10 verfahren, aber mit Baumwoll-Linters und nach Stickstoff-Spülung mit 27,1 Gew.-Teilen festem NaOH (d.h. 2,19 Mol NaOH und 12,4 Mol $H_2O$ pro Mol Cellulose). Die in Wasser klarlösliche NaCMC hatte einen DS von 0,68 (=68% Substitutionsausbeute) und eine Viskosität von mehr als 50 000 mPas.

Beispiel 12

In einem Rühraggregat wurden 21 Gew.-Teile eines Fichten-Zellstoffs (0,5 mm Mahlung) in 360 Gew.-Teilen DME (17,2 Gew.-Teile pro Gew.-Teil Cellulose) suspendiert und mit 39 Gew.-Teilen einer 28,2%igen wäßrigen NaOH-Lösung (2,26 Mol NaOH pro Mol Cellulose) versetzt. Das Gemisch wurde während 45 min bei Raumtemperatur gerührt, und dann setzte man 47 Gew.-Teile einer 44,7%igen wäßrigen Lösung von Diethylaminoethylchlorid-hydrochlorid (insgesamt 24,6 Mol $H_2O$ und 1,0 Mol DEAECl-HCl pro Mol Cellulose) zu, erwärmte das Reaktionsgemisch auf 55°C bis 60°C und hielt diese Temperatur während 120 min. Es wurde wie üblich aufgearbeitet und eine im Wasser klarlösliche DEAEC mit einem DS von 0,42 (=42% Substitutionsausbeute) erhalten.

Vergleichsbeispiel V2

Es wurde nach den Angaben des Beispiels 12 verfahren, aber mit der gleichen Gewichtsmenge Aceton anstelle des DME. Die erhaltene DEAEC wies einen DS von 0,37 (=37% Substitutionsausbeute) mit verringerter Wasserlöslichkeit auf.

Vergleichsbeispiel V3

Es wurde nach den Angaben des Beispiels 12 verfahren, aber mit der gleichen Gewichtsmenge t-Butanol anstelle des DME. Die erhaltene DEAEC wies einen DS von 0,17 (=17% Substitutionsausbeute) auf und war wasserunlöslich.

Vergleichsbeispiel V4

Es wurde nach den Angaben des Beispiels 12 verfahren, aber mit der gleichen Gewichtsmenge Isopropanol anstelle des DME. Die erhaltene DEAEC wies einen DS von 0,04 (=4% Substitutionsausbeute) auf und war wasserunlöslich.

**Patentansprüche**

1. Verfahren zur Herstellung von wasserlöslichen Celluloseethern aus Cellulose und Veretherungsmitteln in Gegenwart von Wasser, Basen und mindestens einem inerten organischen Lösemittel, dadurch gekennzeichnet, daß das Verfahren zweistufig a) in einer Alkalisierungsstufe und b) in einer nachfolgenden Veretherungsstufe durchgeführt und Dimethoxyethan als inertes Lösemittel in der Stufe a) eingesetzt wird.

2. Verfahren zur Herstellung von wasserlöslich Celluloseethern aus Cellulose und Veretherungsmitteln in Gegenwart von Wasser, Basen und mindestens einem inerten organischen Lösemittel, dadurch gekennzeichnet, daß das Verfahren zweistufig a) in einer Alkalisierungsstufe und b) in einer nachfolgenden Veretherungsstufe durchgeführt und Dimethoxyethan nach Beendigung der Stufe a) oder während der Durchführung der Stufe b) eingesetzt wird.

3. Verfahren nach einem der Ansprüche 1 bis 2, dadurch gekennzeichnet, daß 3 bis 30 Gew.-Teile Dimethoxyethan pro Gew.-Teil Cellulose eingesetzt werden.

4. Verfahren nach einem der Ansprüche 1 bis 3, dadurch gekennzeichnet, daß als Veretherungsmittel

ein Alkylchlorid von $C_1$ bis $C_3$, ein Alkylenoxid von $C_2$ bis $C_4$ und/oder eine Chloralkansäure bzw. eines ihrer Salze von $C_2$ bis $C_4$ eingesetzt werden.

**Revendications**

1. Procédé pour la préparation d'éthers de cellulose solubles dans l'eau, à partir de cellulose et d'agents d'éthérification, en présence d'eau, de bases et d'au moins un solvant organique inerte, caractérisé en ce que l'on met en oeuvre le procédé en deux étapes a) dans une étape d'alcalinisation et b) dans une étape d'éthérification subséquente, et on utilise du diméthoxyéthane en tant que solvant inerte dans l'étape a).

2. Procédé pour la préparation d'éthers de cellulose solubles dans l'eau, à partir de cellulose et d'agents d'éthérification, en présence d'eau, de bases et d'au moins un solvant organique inerte, caractérisé en ce que l'on met en oeuvre le procédé en deux étapes a) dans une étape d'alcalinisation et b) dans une étape d'éthérification subséquente, et on utilise du diméthoxyéthane une fois terminée l'étape a) ou pendant l'exécution de l'étape b).

3. Procédé selon l'une des revendications 1 à 2, caractérisé en ce que l'on utilise de 3 à 30 parties en poids de diméthoxyéthane par partie en poids de cellulose.

4. Procédé selon l'une des revendications 1 à 3, caractérisé en ce que l'on utilise en tant qu'agent d'éthérification un chlorure d'alkyle en $C_1$—$C_3$, un oxyde d'alkylène en $C_2$—$C_4$ et/ou un acide chloro-alcanoïque en $C_2$—$C_4$ ou un de ses sels.

**Claims**

1. Process for the preparation of water-soluble cellulose ethers from cellulose and etherifying agents in the presence of water, bases and at least one inert organic solvent, wherein the process is carried out in two stages, a) in an alkalization stage and b) in a subsequent etherification stage, and dimethoxyethane is employed as the inert solvent in stage a).

2. Process for the preparation of water-soluble cellulose ethers from cellulose and etherifying agents in the presence of water, bases and at least one inert organic solvent, wherein the process is carried out in two stages, a) in an alkalization stage and b) in a subsequent etherification stage, and dimethoxyethane is employed after the completion of stage a) or while stage b) is being carried out.

3. The process as claimed in any one of claims 1 to 2, wherein 3 to 30 parts by weight of dimethoxyethane are employed per part by weight of cellulose.

4. The process as claimed in any one of claims 1 to 3, wherein the etherifying agent employed is an alkyl chloride from $C_1$ to $C_3$, an alkylene oxide from $C_2$ to $C_4$ and/or a chloroalkanoic acid from $C_2$ to $C_4$, or one of its salts.